Europäisches Patentamt

European Patent Office

Office européen des brevets

(11) Publication number: **0 207 072 B1**

# EUROPEAN PATENT SPECIFICATION

(45) Date of publication of patent specification: **05.04.89**

(51) Int. Cl.⁴: **C 09 D 5/18, H 01 B 7/28**

(21) Application number: **85900165.3**

(22) Date of filing: **19.12.84**

(86) International application number:
**PCT/HU84/00063**

(87) International publication number:
**WO 86/03765 03.07.86 Gazette 86/14**

(54) **MATERIAL MIXTURES FOR FORMING A COMPLEX FIRE-PROTECTION SYSTEM AND THE APPLICATION THEREOF.**

(43) Date of publication of application:
**07.01.87 Bulletin 87/02**

(45) Publication of the grant of the patent:
**05.04.89 Bulletin 89/14**

(84) Designated Contracting States:
**AT CH DE FR GB LI NL SE**

(56) References cited:
**US-A-4 018 983**
**US-A-4 225 649**

(73) Proprietor: **KENDERI, Tibor**
**Kelenhegyi ut 49**
**H-1118 Budapest (HU)**

(73) Proprietor: **KENDERI, Lászlo**
**Szamado u. 7**
**H-1016 Budapest (HU)**

(72) Inventor: **KENDERI, Tibor**
**Kelenhegyi ut 49**
**H-1118 Budapest (HU)**
Inventor: **KENDERI, Lászlo**
**Szamado u. 7**
**H-1016 Budapest (HU)**

(74) Representative: **Hedley, Nicholas James**
**Matthew et al**
**TZ Gold & Company 9 Staple Inn**
**London WC1V 7QH (GB)**

Courier Press, Leamington Spa, England.

**Description**

Technical field

The invention relates to fire-protection and in particular to a fire protection composition for forming coatings and/or for making walls.

One of the fundamental requirements of materials used for fire-protection is to prevent combustible objects, structures and equipment from bursting into flame when subjected to momentary or permanent heat and to prevent propagation of fire i.e. flames. A further requirement is that fire protection materials should not excessively increase the weight and size of the objects, structures or equipment to be protected. It is also important that the application of protective material should be simple and that the material can be applied to existing objects, structures and equipment (i.e. it is not limited to being built in during the manufacture or fabrication of the object etc.) and also that it can be applied effectively to surfaces (even those of a complicated design and shape) and it should adhere well thereto. It is also essential that materials to be used for fire-protecting coatings and/or walls can be made easily and economically.

Background art

Several solutions have been developed for protecting different objects, e.g. electric cable systems, steel structures and other equipment. However, known solutions only meet parts of the requirements mentioned above; with complicated overcrowded cable systems, intricately divided steel structures etc., the application of a fire-protective coating is often impossible or can only be achieved at an unacceptable expense.

In general, materials developed for the purpose of fire-protection contain fire-resistant mineral fibres (e.g. basalt-wool) and some binding material, e.g. cement; the heat-insulating properties of fire protecting compositions have been improved by incorporating appropriate additives, e.g. expanded pearlite. The composition in the form of a water suspension can be either sprayed or applied manually onto the surface to be protected. A coating of this type is described e.g. in DD-PS 67345, which is intended for the protection of structures made of reinforced concrete and steel; however, in order to be effective, the coating should be about 20 cm thick and it is only fire-resistant up to 1200°C.

Fire-resistant materials also containing pearlite are described in DE—OS 1 243 574 and 1 095 187 and DE—AS 818 749. The solutions described are used mainly for shaping solid profiles and for forming insulating bodies.

DE—OS 2 051 513 discloses a composition which contains—in addition to the above mentioned components—up to 65% silicate, e.g. silica or ground kieselguhr; the composition in the form of a coating that is about 3 cm thick and which is applied by spraying is suitable for the protection of steel structures.

HU—PS 163 291 describes a process for producing sheets made of mineral fibres which can be used for fireproof partition walls, thermal insulation of furnaces and for making casting dies. Sheets are made of slag-wool, mineral wool, asbestos, expanded pearlite, and, as binding material, magnesia and solid sodium silicate. Sodium silicate is used instead of the customarily used water glass solution, (as described e.g. in DE—PS 843 222 and 965 227), which makes manufacture rather difficult; also activation of sodium silicate is complicated and finally the sheets are not suitable for local application.

Wall and coatings containing cement as binding material have to be constantly wetted until the cement sets fully, i.e. until it achieves its proper strength, but mixtures containing mineral fibres do not retain sufficient water and so the mixtures do not set (i.e. they do not reach their proper strength values) without subsequent wetting.

Known material mixtures used for fire-resistant walls are available as prefabricated products only so they are hard to apply *in situ* and, depending on local conditions, they often cannot be used *in situ* at all.

Disclosure of the invention

The aim of our invention is to develop a composition for making coatings and/or walls, e.g. a complex fire-protection system, that can at least partially overcome the disadvantages of known products, which meets safety requirements and which, as far as possible, can be easily applied.

The primary—but not exclusive—aim of our invention is to provide effective fire-protection of electric cables with synthetic coatings and of the immediate vicinity of such cables.

Electric cables coated with a synthetic insulation—mostly polyvinyl chloride (PVC)—are critical from the point of view of fire-protection. If a cable overheats, (e.g. because of a short-circuit or an overload etc. or as a result of external heating) the synthetic insulation can catch fire and the flames propagate with considerable speed along the insulation of the cable, and the fire is thus spread throughout the whole object or structure. Localisation of the fire—in particular in closed spaces, e.g. in railway tunnels, underground railways, tunnels of public works, and power plants—is extremely difficult and in the majority of cases it is absolutely impossible. Fire protection of electric cables represent a highly complex task as, in addition to the general considerations of fire-protection, special requirements must be met e.g. a fire-resistant coating should not provide excessive heat insulation in order to avoid overheating under normal operating loads.

It is also of the utmost importance that the coating is capable of being applied onto cables already installed, as well as those already operating. Cable fires should be prevented from spreading to rooms, buildings and equipment adjacent to the centre of the fire, so that the spread of the fire is limited. Also, the coating should not prevent the replacement of damaged cables and should be removable without damaging existing cables, since in practice the replacement of cables and the installation of new cables occur frequently.

We have found that a composition containing mineral fibres, a finely ground mineral with a high melting point, a mineral expanding in water and being able to form a micellular structure, a synthetic material forming a stable aqueous dispersion and water forms an excellent thin fire-protecting coating on incendiary and combustible objects, equipment and apparatuses—in particular on electric cables—which composition can be applied by spraying; it forms an even layer and meets all the requirements previously mentioned.

The composition contains, in percent by weight, 10 to 30% short mineral fibres; 0.5 to 30%, preferably 2 to 15%, of the finely ground mineral with a high melting point; 1 to 40%, preferably 4 to 25% and expediently 5 to 15%, of the mineral expanding in water; and 2 to 50%, preferably 10 to 35%, of the synthetic dispersion (based on the dry matter content); when the mixture is applied in two layers, the top layer may contain the synthetic dispersion in a higher percentage but not more than 10% by weight more. The mixture should be applied to form a coat approximately 0.8 to 1.6 mm thick.

Preferably, the composition is applied in two layers in which case the mixture forming the layers should preferably be of different colours to ensure the correct layers have been safely applied. The mineral fibres may be short asbestos fibres, chopped glass-wool or rock-wool, and the ground mineral with a high melting point may, for example, be kaolin or siliceous kaolin. The mineral capable of forming a micellular structure and expanding in water may be illite; the synthetic material forming a stable aqueous dispersion may be a polyvinylidene chloride dispersion.

The composition may be made simply by mixing the individual components into a homogeneous mixture and it may be applied onto the object to be protected in a suitable manner, expediently by spraying. When two layers are applied, the top layer should be applied onto the already dry priming coat. The composition can be handled very simply because it does not precipitate during storage due to its pulp-like, permanently homogeneous consistency. When agitated, the composition becomes thin, when sprayed it does not clog the spraying gun, it can be applied both on horizontal and vertical surfaces evenly and permanently. The thin coat thus formed increases the weight of the cables only to a slight extent, it does not provide very high heat insulation and it does not reduce the ability of the cable to conduct an electric load. However, it resists to the effect of a jet flame of 1800°C for a long period.

The coating composition is suitable for the fire-protection of other combustible objects and equipment in addition to cables.

As already mentioned, the scope of the invention includes a composition for forming a wall and/or a coating which is suitable partly for producing a fire-protective coat previously described, but also for thickening such coats and/or for producing heat-resistant solids and for forming walls.

This composition for forming thick coatings or walls contains, in percent by weight, at least 10%, and preferably 10 to 25%, flocculated mineral fibres; 0.5 to 4% (e.g. 1 to 2%) of a finely ground material with a high melting point and preferably with a grain size of less than 0.1 mm; at least 1%, e.g. 1 to 6%, of a ground, water-absorbent, foaming material which is slippery to the touch when in the wet state; 1 to 4%, e.g. 1 to 3%, expanded perlite; an aqueous water glass solution in sufficient quantity for adjusting the consistency of the mixture to the desired level, the weight ratio of water glass to water being in the range of from 1:1 to 1:5, an accelerator for accelerating the binding of water glass, preferably in an amount of 0.1 to 1.5% and optionally a foaming agent that is insensitive to alkaline conditions.

The flocculated mineral fibres may be chopped mineral fibres, e.g. asbestos fibres or rock wool fibres and the fibres may have a fibre length of up to 10 mm long, and preferably a length of 3 to 8 mm. The ground mineral may be a fire-resistant material with a grain-size less than 0.1 mm and with a high melting point, e.g. kaolin or siliceous kaolin. The water absorbent foaming may be ground illite. The accelerator may be sodium silicofluoride and the foaming agent may be a fatty alcohol sulfate.

Prior to use, the optional foaming agent may be dissolved in the aqueous water glass solution. The quantity of foaming agent is preferably 0.2—3%, e.g. 1 to 1.5%.

In order to prepare a thick coating or wall, we mix all the components except the water glass solution and then, while the mixture is stirred, the water glass is added in sufficient quantities to provide the desired consistency of the final composition. In the course of agitation, the mixture becomes foamy and it can be easily handled mechanically and is well suited to be transported in a pipeline. The foamed material can also be transported with a screw conveyor without suffering any damage; when applied onto a surface to be protected or when forming a wall, the desired spongy structure can be maintained.

Depending on demand; the thickness of the coat or wall may be 15 to 30 mm, however, a thickness of up to 80 mm is also possible. This thickness provides full fire protection.

The composition may be used for filling cavities in a structure or it can itself be formed into a structure. The heat insulating properties of the composition is moderate.

The aforementioned thin coating material and the latter coating/wall-forming material can be combined to form a highly effective fire-protection system which can be used to protect cables of vital important, (e.g. emergency stop cables, cables for fire-extinguishers, escape route cables, current supply cables for elevators etc.) and keeps such cables in a safe operational state even in a fire lasting several hours.

Without restricting the scope of invention we give some examples for the composition according to the invention:

A material mixture suitable for forming a thin coating may have the following composition in weight-%:

Priming coat:
10% short asbestos fibre
8% finely ground kaolin
6% finely ground illite
45.5% polyvinylidene chloride dispersion (containing 20% solid matter content and 25.5% water (based on the weight of the whole mixture))
0.5% red dyestuff
30% water

Top layer:
10% short asbestos fibres
8% fibely ground kaolin
6% finely ground illite
45.5% polyvinylidene chloride dispersion (containing 25% solid matter content and 20.5% water (based on the weight of the whole mixture))
0.5% yellow powdered dyestuff
30% water.

Another example for forming the thin coating according to the invention (quantities in weight-%):

Priming coat:
10% short-fibre chopped rock-wool
8% finely ground kaolin
7% finely ground illite
39.5 polyvinylidene chloride dispersion (containing 20% solid matter and 19.5% water (based on the weight of the whole mixture))
0.5% red powdered dyestuff
35% water.

Top layer:
10% short fibre chopped rock-wool
8% finely ground kaolin
6% finely ground illite
43.5% polyvinylidene chloride dispersion (containing 25% solid content and 18.5% water (based on the weight of the whole mixture))
0.5% yellow powdered dyestuff
30% water.

A composition suitable for forming the basis of thick coatings and for wall-making is (quantities in weight-%):
10% asbestos fibre having a length of 4 to 5 mm
2% expanded pearlite (grain size 1 to 2 mm)
3% finely ground illite
0.8% finely ground sodium silicofluoride.
In order to obtain the consistency needed for processing, the dry mixture described above is admixed with 84.2% of a mixture consisting of sodium water glass and water in a ratio of 1:3.

Another example of a composition for preparing a thick coating or for wall making is (quantities in weight-%):
10% chopped rock-wool (fibre length: 3 to 8 mm)
2% finely ground kaolin
2% finely ground illite
2% expanded pearlite (grain size: 1 to 3 mm)
0.3% sodium silicofluoride
1.0% foaming agent (e.g. fatty alcohol sulfonate)
In order to obtain proper consistency, the above dry mixture is admixed with 82.7% of a mixture of sodium-water glass and water in a ratio of 1:3.

4

## Claims

1. A composition for forming a fire protection layer comprising, in weight percent, 10 to 30% short mineral fibres, preferably asbestos fibres and/or chopped glass wool and/or chopped rock wool, 0.5 to 30%, preferably 2 to 15%, of a finely ground mineral having a high melting point, e.g. ground kaolin or ground siliceous kaolin; 1 to 40%, preferably 4 to 25%, of a material expanding in water and being able to form a micellular structure, e.g. illite; 2 to 50%, preferably 10 to 35%, of a synthetic material which can form a stable aqueous dispersion, e.g. polyvinylidene chloride; water and an optional colouring agent.

2. A composition for forming a fire protection layer or wall comprising, in weight percent, at least 10%, preferably 10 to 25%, flocculated mineral fibres, e.g. chopped rock wool; 0.5 to 4%, e.g. 1 to 2%, of a finely ground mineral having a high melting point, e.g. kaolin; at least 1%, and preferably 1 to 6%, of a finely ground, water absorbing, foaming material which is slippery to the touch when in the wet state, e.g. illite; 1 to 4%, e.g. 1 to 3%, expanded pearlite; a sufficient amount of a water glass solution, having a weight ratio of water glass to water in the range of 1:1 to 1:5 to obtain the desired consistency; an accelerator for accelerating the binding of water glass, e.g. sodium silicofluoride, and optionally a foaming agent that is insensitive to alkaline conditions.

3. A fire protection system comprising one or more layers of the coating defined in claim 1 and a coating or wall as defined in claim 2.

4. A method of protecting an object from fire, which comprises applying to the object one of more coating layers as defined in claim 1 and/or a coating or wall as defined in claim 2.


## Patentansprüche

1. Feuerschutzmittel zur Bildung einer Feuerschutzschicht enthaltend, in Gewichtsprozent, 10 bis 30% kurze Mineralfasern, vorzugsweise Asbestfasern und/oder geschnittene Glaswolle und/oder geschnittene Steinwolle; 0,5 bis 30%, vorzugsweise 2 bis 15%, eines feingemahlenen Minerals mit hohen Schmelzpunkt, z.B. gemahlenes Kaolin oder gemahlenes silikathaltiges Kaolin; 1 bis 40%, vurzugsweise 4 bis 25%, eines in Wasser expandierbaren Materials, das mizellare Strukturen zu bilden vermag, z.B. Illit; 2 bis 50%, vorzugsweise 10 bis 35%, eines synthetischen Materials, das eine stabile wässrige Dispression zu bilden vermag, z.B. Polyvinylidenchlorid; Wasser und ggfs. ein Färbemittel.

2. Feuerschutzmittel zur Bildung einer Feuerschutzschicht oder -wand enthaltend, in Gewichtsprozent, mindestens 10%, vorzugsweise 10 bis 25%, geflockte Mineralfasern, z.B. geschnittene Steinwolle; 0,5 bis 4%, z.B. 1 bis 2%, eines feingemahlenen Minerals mit hohem Schmelzpunkt, z.B. Kaolin; mindestens 1%, und vorzugsweise 1 bis 6%, eines feingemahlenen, wasserabsorbierenden schäumenden Materials, das sich in nassem Zustand schlüpfrig anfühlt, z.B. Illit; 1 bis 4%, z.B. 1 bis 3%, geblähtes Perlit; eine ausreichende Menge einer Wasserglaslösung mit einem Gewichtsverhältnis von Wasserglas zu Wasser im Bereich von 1:1 bis 1:5, um die gewünschte Konsistenz zu erreichen; einen Beschleuniger zur Beschleunigung der Bindung von Wasserglas, z.B. Natriumsilcofluorid und ggfs. ein Schäummittel, das gegenüber alkalischen Bedingungen unempfindlich ist.

3. Feuerschutzsystem, mit einer oder mehreren Lagen der in Anspruch 1 definierten Schicht und einer Beschichtung oder Wand, wie in Anspruch 2 definiert.

4. Verfahren zum Schutz von Gegenständen vor Feuer, dadurch gekennzeichnet, daß man auf den Gegenstand eine oder mehrere Beschichtungen, wie in Anspruch 1 definiert, und/oder eine Beschichtung oder Wand, wie in Anspruch 2 definiert, aufbringt.


## Revendications

1. Une composition four former une couche de protection antifeu comprenant, en pourcentage pondéral, 10 à 30% de fibres minérales courtes, de préférence des fibres d'amiante et/ou de la laine de verre hachée et/ou de la laine de roche hachée; 0,5 à 20%, de préférence 2 à 15%, d'un minéral finement broyé à point de fusion élevé, par exemple du kaolin broyé ou du kaolin siliceux broyé; 1 à 40%, de préférence 4 à 25%, d'un matériau se dilatant dans l'eau et pouvant former une structure micellaire, par exemple de l'illite; 2 à 50%, de préférence 10 à 35%, d'un matériau synthétique qui peut former une dispersion aqueuse stable, par exemple du chlorure de polyvinylidène; de l'eau et un éventuel agent colorant.

2. Une composition pour former une couche ou une paroi de protection antifeu comprenant, en pourcentage pondéral, au moins 10%, de préférence 10 à 25% de fibres minérales floculées, par exemple de la laine de roche hachée; 0,5 à 4%, par exemple 1 à 2%, d'un minéral finement broyé ayant un point de fusion élevé, par exemple du kaolin; au moins 1%, et de préférence 1 à 6%, d'un matériau moussant finement broyé et absorbant l'eau, qui soit glissant au toucher à l'état humide, par exemple de l'illite; 1 à 4%, par exemple 1 à 3%, de perlite expansée; une quantité suffisante de solution de verre soluble, avec un rapport en poids entre le verre soluble et l'eau dans l'intervalle de 1:1 à 1:5 pour obtenir la consistance désirée; un accélérateur pour accélérer la liaison du verre soluble, par exemple dufluorosilicate de sodium, et, éventuellement, un agent moussant qui soit insensible aux conditions alcalines.

3. Un système antifeu comprenant une ou plusieurs couches du revêtement défini à la revendication 1 et un revêtement ou paroi tel que défini à la revendication 2.

4. Un procédé pour protéger un objet contre le fue, qui comprend le fait d'appliquer à l'objet une ou plusieurs couches de revêtement telles que définies dans la revendication 1 et/ou un revêtement ou paroi tel que défini dans la revendication 2.